# EUROPÄISCHE PATENTSCHRIFT

(11) **EP 1 166 532 B1**
(45) Veröffentlichungstag und Bekanntmachung des Hinweises auf die Patenterteilung: **16.03.2005**
(21) Anmeldenummer: 00934859.0
(22) Anmeldetag: 03.04.2000
(51) Int. Cl.: H04M 1/60

(54) **KOMMUNIKATIONSENDGERÄT**
COMMUNICATIONS TERMINAL
TERMINAL DE COMMUNICATION

(30) Priorität: 07.04.1999 DE 19915694
(43) Veröffentlichungstag der Anmeldung: 02.01.2002
(73) Patentinhaber: SIEMENS AKTIENGESELLSCHAFT, 80333 München (DE)
(72) Erfinder: KRÜGER, Werner, D-81477 München (DE)
(86) Internationale Anmeldenummer: PCT/DE2000/001022
(87) Internationale Veröffentlichungsnummer: WO 2000/060833

(56) Entgegenhaltungen:
- EP-A- 0 682 437
- EP-A- 0 717 547
- EP-A- 0 836 310
- WO-A-99/05840
- GB-A- 2 327 562
- US-A- 5 553 134

## Beschreibung

Die Erfindung betrifft ein Kommunikationsendgerät, insbesondere eine Mobilfunkstation, nach dem Oberbegriff des Anspruchs 1.

Während in der Vergangenheit Fernsprechverbindungen in der Regel von stationären Endgeräten aus betrieben wurden, die zumeist an gegenüber Umgebungsgeräuschen relativ gut abgeschirmten Orten (innerhalb Räumen, Telefonzellen) installiert sind, ist mit der explosionsartigen Ausbreitung der Mobilfunk-Telefonie das Problem in den Vordergrund getreten, daß Fernsprechverbindungen auch unter äußerst ungünstigen und sich schnell und stark ändernden akustischen Bedingungen aufgebaut und aufrechterhalten werden müssen. Die NF-Verstärkerstufen moderner Endgeräte, insbesondere von Mobilfunkgeräten, sind daher mit manuell oder menügesteuert betätigbaren Mitteln zur Lautstärkeeinstellung der Hörkapsel ausgerüstet. Mit der entsprechenden Einstelltaste bzw. Menüfunktion kann der Benutzer manuell eine Korrektur der aktuellen Hörlautstärke bei sich ändernden akustischen Umgebungsbedingungen vornehmen.

Diese manuellen Korrekturen sind mehr oder weniger umständlich, und menügesteuerte Einstellvorgänge erfordern die Beobachtung des Anzeigefelds des Endgeräts, was die Notwendigkeit einer mindestens kurzzeitigen Unterbrechung der Kommunikation nach sich zieht.

Es kommt hinzu, daß bei jeder wesentlichen Änderung der Umgebungslautstärke erneut ein Korrekturvorgang vorgenommen werden muß, was letztlich eine flüssige und konzentrierte Gesprächsführung erheblich erschwert. Schließlich birgt die Notwendigkeit einer manuellen Korrektur der Hörlautstärke in bestimmten Situationen, so etwa während der Führung eines Fahrzeugs oder der Bedienung einer Maschine, ein gewisses Sicherheitsrisiko.

In der Praxis wird daher von den im Stand der Technik verfügbaren Einstellmöglichkeiten vielfach kein Gebrauch gemacht.

Aus der EP-A-0 836 310, der US-A-5 553 134, der GB-A-2 327 562, sowie aus der EP-A-0 717 547 sind Verfahren und Vorrichtungen zur Anpassung der Hörlautstärke an die Umgebungsbedingungen bekannt, die allerdings sämtlich auf einer umständlich und aufwendigen Separierung der Geräuschund Sprechsignale basieren. Die hiermit verbundenen Nachteile sollen durch die vorliegende Erfindung vermieden werden.

Der Erfindung liegt daher die Aufgabe zugrunde, ein Kommunikationsendgerät mit einer einfacher und sicherer funktionierenden Anpassung der Hörlautstärke an die Umgebungsbedingungen anzugeben.

Diese Aufgabe wird gelöst durch ein Kommunikationsendgerät mit den Merkmalen des Anspruchs 1.

Die Erfindung schließt Erkenntnisse zu psychoakustischen Zusammenhängen ein, die wie folgt skizziert werden können:
Es bestehe eine Sprechverbindung zwischen dem Teilnehmer A, der ein Mobiltelefon in einem städtischen Bereich mit stark schwankender Umgebungslautstärke benutzt, und einem Teilnehmer B als Kommunikationspartner, der seinerseits ein beliebiges Endgerät benutzen kann. Auf Seiten des Teilnehmers A nehmen während der bestehenden Sprechverbindung die
Umgebungsgeräusche - etwa durch anschwellenden Straßenlärm, Fluglärm, einen vorbeifahrenden Zug etc.- zu. Der Teilnehmer A reagiert darauf unbewußt durch Erhöhung der Sprechlautstärke. Umgekehrt reagiert der Teilnehmer A auf eine Verringerung der Lautstärke der Umgebungsgeräusche, indem er unbewußt leiser spricht. Dieses Verhalten ist vermutlich dadurch geprägt, daß bei einer Unterhaltung zwischen zwei am gleichen Ort befindlichen Gesprächspartnern die Änderung der Umgebungslautstärke sich gleichermaßen für beide auswirkt und durch eine Anpassung der Sprechlautstärke die Verständlichkeit der eigenen Worte für den Gesprächspartner einerseits und ein möglichst angenehmes Lautstärkeniveau andererseits gewährleistet werden können. Im Rahmen einer Fernsprechverbindung ist dieses im unmittelbaren persönlichen Gespräch geprägte Verhalten jedoch nur bedingt sinnvoll, weil geräuschkompensierte Sprechkapseln von Telefonen auf den Nahbereich abgestimmt sind und Änderungen der Umgebungslautstärke nur sehr abgeschwächt an den Teilnehmer B weitergeben. Dieser empfindet das An- und Abschwellen der Stimme des Teilnehmers A daher zumindest als unmotiviert, wenn nicht als lästig.

Jedoch eröffnet der skizzierte Zusammenhang die technische Möglichkeit, aufgrund einer Erfassung der Sprechlautstärke des Benutzers eines Telefons die Hörlautstärke dieses Telefons selbsttätig einzustellen. In überraschender Weise wird damit eine - technisch schwierige und zumindest aufwendige - Separierung der Umgebungsgeräusche von der Sprache des Benutzers verzichtbar. Es hat sich als ausreichend erwiesen, die Sprechlautstärke zu erfassen und die Verstärkungs-Einstellmittel der NF-Verstärkerstufe mit einem aus dieser Erfassung abgeleiteten Steuersignal zur Einstellung des Verstärkersfaktors anzusteuern.

In einer einfachen und zweckmäßigen Ausführung ist direkt der Sprechkapsel des Telefons eine Pegel- bzw. Spannungsmeßeinrichtung nachgeordnet, die die Erfassung der Sprechlautstärke ausführt.

Gewisse Aufmerksamkeit erfordert die angemessene Verarbeitung des primären Meßsignals zur Vermeidung unerwünschter Verstärkungsänderungen und Regelschwingungen im Sprech-Hör-System infolge der natürlichen Lautstärkeschwankungen im Redefluß des Benutzers sowie bei Sprechpausen. Hierzu ist zweckmäßigerweise zunächst eine Mittelung des Lautstärkesignals mit einer geeignet gewählten Zeitkonstanten, beispielsweise im Sekundenbereich vorzusehen. Sprechpausen sind gesondert zu berücksichtigen, etwa durch Deaktivierung der Signalauswertung bei Unterschreitung eines vorbestimmten Schwellwertpegels. In etablierten Mobilfunkstandards sind im übrigen Funktionen vorgesehen, die in diesem Zusammenhang nutzbar sind. So umfaßt die Funktionalität eines GSM-Sprachcoders und -decoders (CODEC) den sogenannten DTX-Modus (Discontinuous Transmission), bei dem der Sender nur aktiviert wird, wenn in einem aktuellen Sprachrahmen (bei GMS: 20 ms) auch tatsächlich Sprachinformationen enthalten sind. Diese Funktion kann grundsätzlich auch zur Ausscheidung von Sprechpausen des Benutzers bei der Auswertung der Sprechlautstärke genutzt werden.

In einer flexibel auf die Sprechgewohnheiten des Nutzers bzw. den aktuellen Einsatzbereich des Telefons anpaßbaren Ausführung ist das Mittelungsintervall und/oder der erwähnte Deaktivierungs-Schwellwert manuell oder menügesteuert einstellbar. So kann beispielsweise durch Erhöhung des Deaktivierungs-Schwellwerts dem Einsatz einer Mobilstation mit empfindlicher Sprechkapsel bei hoher Umgebungslautstärke (an Verkehrsknotenpunkten, in geräuschintensiven Produktionsbereichen, im Küstenbereich etc.) Rechnung getragen werden, und die individuelle Einstellung des Mittelungsintervalls ermöglicht die Vorwahl eines eher sensiblen oder trägeren Ansprechens der Verstärkungseinstellung in Abhängigkeit von den persönlichen Vorlieben des Benutzers.

In einer weiteren vorteilhaften Ausführung sind die Mittel zur Erfassung der Sprechlautstärke bzw. zur Verstärkungseinstellung in Abhängigkeit hiervon abschaltbar ausgeführt, so daß das Telefon auch mit festeingestellter NF-Verstärkung betrieben werden oder auf manuelle Verstärkungseinstellung übergegangen werden kann.

In einer weiteren zweckmäßigen Ausführung ist der Bereich, in dem sich der Lautstärkewert der Hörkapsel in Abhängigkeit von den Umgebungsgeräuschen verändern kann, als Teilbereich ("Fenster") innerhalb des Gesamtbereichs der realisierbaren Hörkapsellautstärke bzw. des Gesamtbereichs des NF-Pegels vorbestimmbar. Zusätzlich ist bei dieser Ausführung das Vorsehen von Mitteln zur bedarfsweisen Verschiebung dieses Fensters innerhalb des Pegel-Gesamtbereichs von Vorteil. Die Mittel zur Ausführung dieser Verschiebung können wiederum manuell durch einen Schalter oder menügesteuert betätigt werden. Alternativ hierzu ist eine automatische Verschiebung in Abhängigkeit von einem definierten Parameter, beispielsweise der Empfangsfeldstärke einer Mobilstation, realisierbar.

Auch eine Erfassung der Sprachdynamik des Benutzers kann in einer speziellen Ausführung ein zusätzliches Steuersignal sowohl für die Positionierung des erwähnten "Pegelfensters" als auch für eine spezielle adaptive Mittelwertbildung der Sprechlautstärke liefern.

In einer vorteilhaften Weiterbildung des Erfindungsgedankens ist es weiterhin vorgesehen, den für den Gesprächspartner einer Fernsprechverbindung irritierenden Effekt einer Veränderung der Sprechlautstärke bei Änderung der Umgebungsgeräuschbelastung (die der andere Teilnehmer speziell bei Verwendung eines geräuschkompensierten Mikrofons in der Sprechkapsel seines Gesprächspartners nur sehr eingeschränkt mitbekommt) mindestens partiell zu kompensieren. Hierzu ist zweckmäßigerweise eine mit dem Eingang der NF-Verstärkerstufe - wo der unerwünscht schwankende Signalpegel anliegt - verbundene Regelstufe vorgesehen.

Auch diese Regelstufe ist in einer bevorzugten Ausführung über ein Schaltelement oder eine Menüsteuerung wahlweise aktivier- oder deaktivierbar, um eine Anpassung an die Hörgewohnheiten des Benutzers zu ermöglichen.

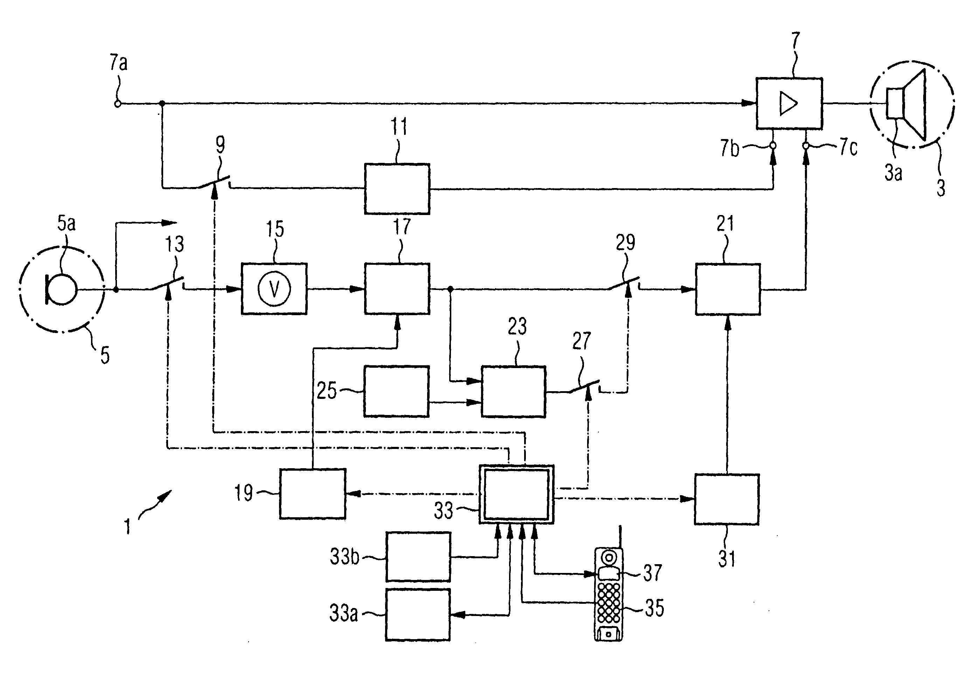

Weitere Vorteile und Zweckmäßigkeiten der Erfindung ergeben sich aus den Unteransprüchen sowie der nachfolgenden Beschreibung einer bevorzugten Ausführungsform anhand der Figur.

Die Figur zeigt in stark vereinfachter Form eines Funktions-Blockschaltbilds die im Zusammenhang mit der Erläuterung der Erfindung wesentlichen Komponenten eines Mobiltelefons 1, zu denen eine Hörkapsel 3 mit einem Lautsprecher 3a, eine Sprechkapsel 5 mit einem geräuschkompensiertes Mikrofon 5a und eine NF-Verstärkerstufe 7 mit einem NF-Signaleingang 7a gehören.

Mit dem NF-Signaleingang 7a ist neben der NF-Verstärkerstufe 7 über einen ersten elektronisch steuerbaren Schalter 9 eine NF-Pegel-Regelstufe 11 verbunden, deren Ausgang mit einem ersten Steuereingang 7b der NF-Verstärkerstufe 7 verbunden ist.

Die Sprechkapsel 5 ist über einen zweiten elektronisch steuerbaren Schalter 13 mit einem Spannungsmesser 15 zur Erfassung des aktuellen Pegels der Sprechlautstärke am Mikrofon 5a verbunden. Der Ausgang des Spannungsmessers 15 ist mit einer Mittelungsstufe 17 verbunden, die über einen Steuereingang mit dem Ausgang einer Mittelungsintervall-Einstelleinrichtung 19 verbunden ist. Ausgangsseitig ist die Mittelungsstufe 17 einerseits mit einer Verstärkungseinstellstufe 21 und andererseits mit einem Eingang einer Sprechpegel-Vergleichereinheit 23 verbunden. Deren anderer Eingang ist mit einem Sprechpegel-Schwellwertspeicher 25 verbunden, und ihr Ausgang steht über einen dritten elektronisch steuerbaren Schalter 27 in Steuersignalverbindung mit einem vierten Schalter 29, der die Verbindung zwischen der Mittelungsstufe 17 und der Verstärkungseinstellstufe 21 in Abhängigkeit vom Ausgangssignal der Sprechpegel-Vergleichereinheit 23 und der Stellung des dritten Schalters 27 herstellt oder unterbricht.

Der Verstärkungseinstellstufe 21 ist über einen Steuereingang eine Verstärkungsbereich-Vorwahlstufe 31 zugeordnet, und die Verstärkungseinstellstufe ist ausgangsseitig mit einem zweiten Steuereingang 7c der NF-Verstärkerstufe 7 verbunden. Der Ausgang der NF-Verstärkerstufe 7 ist mit dem Lautsprecher 3a der Hörkapsel 3 verbunden.

Der erste, zweite und vierte steuerbare Schalter 9, 13 und 29 sowie die Mittelungsintervall-Einstelleinrichtung 19 und die Verstärkungsbereich-Vorwahlstufe 31 werden über einen Mikrocontroller 33 des Mobiltelefons angesteuert, der in üblicher Weise mit dessen Eingabetastatur 35 und dem Display 37 verbunden ist und dem ein Programmspeicherbereich (ROM) 33a und ein Arbeitsspeicherbereich (RAM) 33b zugeordnet sind.

Die Funktionsweise dieser Anordnung ist wie folgt: Die NF-Pegel-Regelstufe 11, die grundsätzlich wie eine an sich bekannte automatische Pegelregelung arbeitet, bewirkt - je nach konkreter Auslegung - eine partielle oder vollständige Kompensation von Schwankungen des Eingangspegels am NF-Signaleingang 7a, sofern der erste Schalter 9 geschlossen und damit diese Funktion aktiviert ist. Hiermit werden insbesondere umgebungsgeräuschbedingte Erhöhungen oder Verminderungen der Sprechlautstärke des Gesprächspartners einer Fernsprechverbindung kompensiert.

Sofern der zweite Schalter 13 geschlossen und damit die Funktion der automatischen Anpassung der Hörlautstärke an die Sprechlautstärke aktiviert ist, wird durch den Spannungsmesser 15 der Sprechlautstärkepegel erfaßt, wobei das Ausgangssignal des Spannungsmessers in der Mittelungsstufe 17 einer Mittelung mit einem über die Mittelungsintervall-Einstelleinrichtung 19 vorgewählten Mittelungszeitintervall, bevorzugt im Bereich zwischen 1 und 10 s, unterzogen wird. Hierdurch wird eine Beeinflussung der NF-Verstärkung durch kurzzeitige Sprechpausen zwischen einzelnen Worten oder Sätzen oder die natürlichen Pegelschwankungen im Redefluß unterbunden, wobei die Vorwahl eines Mittelungszeitintervalls über die Tastatur 35, den Mikrocontroller 33 und die Mittelungsintervalls-Einstelleinrichtung 19 eine spezifische Anpassung an die Sprechgewohnheiten des Benutzers oder die konkrete Einsatzsituation des Mobiltelefons ermöglicht.

Das Ausgangssignal der Mittelungsstufe 17 wird in der Sprechpegel-Vergleichereinheit 23 einer Pegeldiskriminierung mit einem im Sprechpegel-Schwellwertspeicher abgelegten Schwellwert unterzogen, sofern diese Funktion durch Schließen des dritten Schalters 27 aktiviert ist. Unterschreitet der Lautstärkepegel am Mikrofon 5a den vorbestimmten Schwellwert, so wird durch Öffnen des vierten Schalters 29 bewirkt, daß die entsprechende Gesprächsphase nicht für die automatische Verstärkungseinstellung wirksam wird. Sobald wieder ein Sprechpegel oberhalb des Schwellwerts vorliegt, ändert sich das Ausgangssignal der Vergleichereinheit 23, woraufhin der vierte Schalter 29 wieder geschlossen und die sich anschließende Gesprächsphase durch Übermittlung der Ausgangssignale der Mittelungsstufe 17 an die Verstärkungs-Einstellstufe 21 für die NF-Verstärkungseinstellung wirksam gemacht wird.

Über die Tastatur 35 und den Mikrocontroller 33 wird auch - wie für die übrigen Funktionen ggf. unter Einsatz einer Menüsteuerung mit Hilfe des Display 37 - durch die Verstärkungsbereich-Vorwahlstufe 31 ein Verstärkungsbereich bzw. "Pegelfenster" vorgewählt, in dessen Grenzen die Verstärkungs-Einstellstufe 21 im Ansprechen auf das Ausgangssignal der Mittelungsstufe 17 eine Einstellung der Verstärkung der NF-Verstärkerstufe 7 über deren zweiten Steuereingang 7c vornehmen soll.

Die Ausführung der Erfindung ist nicht auf das beschriebene Ausführungsbeispiel beschränkt, sondern auch in einer Vielzahl von Abwandlungen möglich. So kann in vereinfachten Ausführungen auf einige oder auch alle beschriebenen Umschaltund Einstellfunktionen verzichtet werden, oder diese können mit herkömmlichen elektrischen Schaltern bzw. Einstellreglern realisiert werden. Die Ausführung der Erfindung ist nicht nur bei einem Mobiltelefon, sondern auch insbesondere bei einem Schnurlostelefon oder einem normalen Festnetz-Endgerät möglich.

Es versteht sich von selbst, daß die beschriebenen Funktionen teilweise softwaremäßig realisiert werden können. Hierfür bieten insbesondere die vielfältigen Sprachbearbeitungsfunktionen der Protokolle moderner Mobilfunksysteme sinnvolle Möglichkeiten, die einen weitgehenden Verzicht auf zusätzlichen Hardwareaufwand ermöglichen. Bei Verfügbarkeit eines digitalen Signalprozessors (DSP) sind die oben beschriebenen Funktionen mit hoher Präzision und nur von der Software abhängig realisierbar.

Das Verfahren ist - neben Telefonen- generell in allen Kommunikationsgeräten mit Wechsel- oder Gegensprechbetrieb (also auch z.B. Türsprechstellen o.ä.) anwendbar.

## Patentansprüche

1. Kommunikationsendgerät mit einer Sprechkapsel (5), einer Hörkapsel (3) und einer NF-Verstärkerstufe (7) sowie Verstärkungs- Einstellmitteln (21, 31) zur Veränderung des Verstärkungsfaktors der NF-Verstärkerstufe zur Einstellung der Hörlautstärke, **dadurch gekennzeichnet, dass** Sprechlautstärke- Erfassungsmittel (15-19) vorgesehen sind, die eine direkt der Sprechkapsel nachgeordnete Pegelmesseinrichtung umfassen, welche die Erfassung der Sprechlautstärke des Benutzers des Kommunikationsendgerätes ausführt, wobei die Verstärkungs- Einstellmittel (21, 31) mit den Sprechlautstärke- Erfassungsmitteln verbunden sind derart, dass der Verstärkungsfaktor der NF- Verstärkerstufe (7) in Abhängigkeit von der Sprechlautstärke einstellbar ist, wobei diese Einstellung des Verstärkungsfaktors mit einem aus dieser Erfassung abgeleiteten Steuersignal, ohne Separierung der Umgebungsgeräusche von der Sprache des Benutzers erfolgt.

2. Kommunikationsendgerät nach Anspruch 1,
**dadurch gekennzeichnet,**
**daß** die Sprechlautstärke-Erfassungsmittel eine der Sprechkapsel (5) zugeordnete Spannungsmeßeinrichtung (15) mit einer nachgeordneten Mittelungsstufe (17), insbesondere mit einem Mittelungsintervall im Bereich zwischen 1 und 10 s aufweisen.

3. Kommunikationsendgerät nach Anspruch 2,
**gekennzeichnet durch**
manuell bzw. menügesteuert mittels einer Betriebssteuereinheit (33) betätigbare Mittelungsintervall-Einstellmittel (19).

4. Kommunikationsendgerät nach einem der vorangehenden Ansprüche,
**gekennzeichnet durch**
manuell bzw. menügesteuert mittels einer Betriebssteuereinheit (33) betätigbare Schaltmittel (13) zur Aktivierung oder Deaktivierung der Sprechlautstärke-Erfassungsmittel (15 bis 19) oder der auf diese ansprechenden Verstärkungs-Einstellmittel (21).

5. Kommunikationsendgerät nach einem der vorangehenden Ansprüche,
**dadurch gekennzeichnet,**
**daß** den Sprechlautstärke-Erfassungsmitteln (15 bis 19) Verarbeitungsmittel zur Berücksichtigung von Sprechpausen zugeordnet sind.

6. Kommunikationsendgerät nach einem der vorangehenden Ansprüche,
**dadurch gekennzeichnet,**
**daß** die Verstärkungs-Einstellmittel (21, 31) eine Verstärkungsbereich-Vorwahlstufe (31) zur Festlegung eines Einstellfensters innerhalb des Gesamt-Veränderungsbereichs des Verstärkungsfaktors aufweisen.

7. Kommunikationsendgerät nach Anspruch 6,
**dadurch gekennzeichnet,**
**daß** die Verstärkungsbereich-Vorwahlstufe manuell bzw. menügesteuert mittels einer Betriebssteuereinheit (33) betätigbar ist.

8. Kommunikationsendgerät nach einem der Ansprüche 3 bis 7,
**dadurch gekennzeichnet,**
**daß** die Mittelungsintervall-Einstellmittel (19) und/oder die Verstärkungsbereich-Vorwahlstufe (31) einen Steuersignaleingang zur selbsttätigen Aktivierung bzw. Einstellung in Abhängigkeit von einem außerhalb der NF-Verstärkerstufe (7) erzeugten Steuersignal aufweist.

9. Kommunikationsendgerät nach einem der vorangehenden Ansprüche,
**dadurch gekennzeichnet,**
**daß** Verstärkungs-Regelmittel (11) zur mindestens partiellen Kompensation von Pegeländerungen am Signaleingang (7a) der NF-Verstärkerstufe (7) vorgesehen sind.

10. Kommunikationsendgerät nach Anspruch 9,
**dadurch gekennzeichnet,**
**daß** die Verstärkungs-Regelmittel (11) manuell durch ein Schaltelement (9) bzw. menügesteuert mittels einer Betriebssteuereinheit (33) betätigbar sind.

## Claims

1. Communications terminal having a transmitter capsule (5), a receiver capsule (3) and an AF amplifier stage (7) as well as gain adjustment means (21,31) for varying the gain factor of the AF amplifier stage in order to adjust the receiver volume,
**characterized**
**in that** speech volume detection means (15-19) are provided, which comprise a level measurement device directly following the transmitter capsule, which detects the speech volume of the user of the communications terminal, with gain adjustment means (21,31) being connected to the speech volume detection means in such a manner that the gain factor of the AF amplifier stage (7) can be adjusted as a function of the speech volume, this adjustment of the gain factor being carried out by a control signal originating from the detection without separation of the environmental noise from the user's speech.

2. Communications terminal according to Claim 1,
**characterized**
**in that** the speech volume detection means have a voltage measurement device (15) which is associated with the transmitter capsule (5) and has a downstream averaging stage (17), in particular with an averaging interval in the range between 1 and 10s.

3. Communications terminal according to Claim 2,
**characterized by**
averaging interval adjustment means (19) which can be operated manually or under menu control by means of an operation control unit (33).

4. Communications terminal according to one of the preceding claims,
**characterized by**
switching means (13) which can be operated manually or under menu control by means of an operation control unit (33), for activation or deactivation of the speech volume detection means (15 to 19) or of the gain adjustment means (21) which respond thereto.

5. Communications terminal according to one of the preceding claims,
**characterized**
**in that** the speech volume detection means (15 to 19) have associated processing means for taking account of pauses in speech.

6. Communications terminal according to one of the preceding claims,
**characterized**
**in that** the gain adjustment means (21,31) have a gain range preselection stage (31) for defining an adjustment window within the overall variation range of the gain factor.

7. Communications terminal according to Claim 6,
**characterized**
**in that** the gain range preselection stage can be operated manually or under menu control by means of an operation control unit (33).

8. Communications terminal according to one of Claims 3 to 7,
**characterized**
**in that** the averaging interval adjustment means (19) and/or the gain range preselection stage (31) have/has a control signal input for automatic activation and adjustment as a function of a control signal which is produced outside the AF amplifier stage (7).

9. Communications terminal according to one of the preceding claims,
**characterized**
**in that** gain control means (11) are provided for at least partial compensation for level changes at the signal input (7a) of the AF amplifier stage (7).

10. Communications terminal according to Claim 9,
**characterized**
**in that** the gain control means (11) can be operated manually by means of a switching element (9), or under menu control by means of an operation control unit (33).

## Revendications

1. Terminal de communication comprenant une capsule microphonique (5), une capsule d'écoute (3) et un étage d'amplificateur basses fréquences (7) ainsi que des moyens de réglage de l'amplification (21, 31) pour modifier le facteur d'amplification de l'étage de l'amplificateur basses fréquences pour le réglage du volume sonore reçu, **caractérisé en ce que** sont prévus des moyens de détection du volume sonore émis (15 - 19), lesquels comprennent un dispositif de mesure de niveau monté directement en aval de la capsule microphonique, lequel effectue la détection du volume sonore émis par l'utilisateur du terminal de communication, les moyens de réglage de l'amplification (21, 31) étant reliés aux moyens de détection du volume sonore émis de manière telle que le facteur d'amplification de l'étage de l'amplificateur basses fréquences (7) est réglable en fonction du volume sonore émis, ce réglage du facteur d'amplification se faisant avec un signal de commande dérivé de cette détection sans séparation entre les bruits environnants et la voix de l'utilisateur.

2. Terminal de communication selon la revendication 1,
**caractérisé en ce que**
les moyens de détection du volume sonore émis comportent un dispositif de mesure de la tension (15) affecté à la capsule microphonique (5), avec un étage de détermination de la moyenne (17) en aval et, en particulier, avec un intervalle de détermination de la moyenne compris dans la plage allant de 1 à 10 s.

3. Terminal de communication selon la revendication 2,
**caractérisé par**
des moyens de réglage de l'intervalle de détermination de la moyenne (19) actionnables manuellement resp. par commande par menu au moyen d'une unité de commande du fonctionnement (33).

4. Terminal de communication selon l'une des revendications précédentes,
**caractérisé par**
des moyens de commutation (13) actionnables manuellement resp. par commande par menu au moyen d'une unité de commande du fonctionnement (33), pour activer ou désactiver les moyens de détection du volume sonore émis (15 à 19) ou les moyens de réglage de l'amplification (21) qui leur répondent.

5. Terminal de communication selon l'une des revendications précédentes,
**caractérisé en ce que**
des moyens de traitement sont affectés aux moyens de détection du volume sonore émis (15 à 19) pour la prise en compte de pauses vocales.

6. Terminal de communication selon l'une des revendications précédentes,
**caractérisé en ce que**
les moyens de réglage de l'amplification (21, 31) comportent un étage de présélection de la plage d'amplification (31) pour déterminer une fenêtre de réglage à l'intérieur de toute la plage de modification du facteur d'amplification.

7. Terminal de communication selon la revendication 6,
**caractérisé en ce que**
l'étage de présélection de la plage d'amplification est actionnable manuellement resp. par commande par menu au moyen d'une unité de commande du fonctionnement (33).

8. Terminal de communication selon l'une des revendications 3 à 7,
**caractérisé en ce que**
les moyens de réglage de l'intervalle de détermination de la moyenne (19) et/ou l'étage de présélection de la plage d'amplification (31) comportent une entrée signal de commande pour l'activation resp. le réglage automatiques en fonction d'un signal de commande produit en dehors de l'étage de l'amplificateur basses fréquences (7).

9. Terminal de communication selon l'une des revendications précédentes,
**caractérisé en ce que**
sont prévus des moyens de réglage de l'amplification (11) pour compenser au moins partiellement des modifications de niveau au niveau de l'entrée signal (7a) de l'étage de l'amplificateur basses fréquences (7).

10. Terminal de communication selon la revendication 9,
**caractérisé en ce que**
les moyens de réglage de l'amplification (11) sont actionnables manuellement par un élément de commutation (9) resp. par commande par menu au moyen d'une unité de commande du fonctionnement (33).
